# EUROPÄISCHE PATENTSCHRIFT

(11) **EP 3 069 926 B1**
(45) Veröffentlichungstag und Bekanntmachung des Hinweises auf die Patenterteilung: **03.07.2019**
(21) Anmeldenummer: 16161131.4
(22) Anmeldetag: 18.03.2016
(51) Int. Cl.: B60P 1/28

(54) **KIPPERAUFBAU FÜR EIN LASTENTRANSPORTFAHRZEUG**
DUMP BODY FOR A LOAD CARRYING VEHICLE
SUPERSTRUCTURE A BENNE BASCULANTE POUR UN CAMION

(30) Priorität: 20.03.2015 DE 102015205128
(43) Veröffentlichungstag der Anmeldung: 21.09.2016
(73) Patentinhaber: Franz Xaver Meiller Fahrzeug- und Maschinenfabrik - GmbH & Co KG, 80997 München (DE)
(72) Erfinder: Popp, Klaus, 82346 Andechs (DE)
(74) Vertreter: Tiesmeyer, Johannes

(56) Entgegenhaltungen:
- EP-A2- 1 457 381
- US-A- 3 157 435

## Beschreibung

Die Erfindung betrifft einen Kipperaufbau für ein Lastentransportfahrzeug nach dem Oberbegriff des Anspruchs 1.

Bestimmte gelegentlich oder auch regelmäßig von einer Wartungsperson durchzuführende Kontrollen und/oder Wartungsarbeiten an dem mit einem solchen Kipperaufbau ausgestatteten Kipperfahrzeug, wie etwa Abschmierarbeiten, Reinigungsarbeiten oder Justierarbeiten, erfordern für die Wartungsperson einen freien und sicheren Zugang von oben her zu einem Bereich zwischen den Längsträgern des Rahmens. Dieser Bereich ist durch die Kippbrücke versperrt, wenn sie sich in ihrer normalen abgesenkten Stellung befindet. Zwar könnte der geforderte Zugang verschafft werden, indem die Kippbrücke mittels ihres normalerweise hydraulischen Hubantriebs in eine angehobenen Kippstellung verschwenkt und in dieser Stellung gehalten wird. Diese mittels hydraulischer Antriebe und Ventileinrichtungen unter Hydraulikdruck erfolgende Vorgehensweise ist aus verschiedenen Gründen nicht erwünscht, wenn es nur darum geht, den Zugang zu dem Bereich zwischen den Längsträgern des Rahmens für die Kontroll- und/oder Wartungsarbeiten zu verschaffen und in gesicherter Weise aufrecht zu erhalten. Es ist bekannt, eine Sicherungsstützeinrichtung zu verwenden, die die Kippbrücke in einer zwischen der abgesenkten Stellung und der angehobenen Kippstellung liegenden Wartungskippstellung mechanisch abstützen kann. In dieser Wartungskippstellung ist die Kippbrücke um einen Schrägstellungs- oder Kippwinkel von z.B. 8° gegenüber der abgesenkten Stellung angehoben. Die Wartungsperson hat dann ungefährlichen Zugang von oben her zu dem Bereich zwischen den Längsträgern des Rahmens.

Zum Einstellen der Kippbrücke in ihre Wartungskippstellung wird sie zunächst über die Wartungskippstellung hinaus um die Kippachse nach oben verschwenkt. Sodann wird ein Stützelement der Sicherungsstützeinrichtung in eine Stützstellung bewegt, in der es im Absenkweg der Kippbrücke liegt. Daraufhin wird die Kippbrücke wieder abgesenkt, bis sie auf das Stützelement der Sicherungsstützeinrichtung trifft und somit in die gewünschte Wartungskippstellung eingerückt ist.

Bei einem bekannten Kipperaufbau der hier betrachteten Art ist die Sicherungsstützeinrichtung seitlich außen am Rahmen angeordnet und weist ein Stützelement in Form eines länglichen Stabes auf, der um eine quer zur Längsrichtung der Längsträger verlaufende Schwenkachse an dem betreffenden Längsträger gelagert ist, so dass er zwischen einer heruntergeklappten Passivstellung, in der er keine Störkontur für die Kippbrücke bei deren Absinken in die abgesenkte Stellung bildet, und einer hochgestellten Stützstellung, bewegbar ist. In der Stützstellung kann der Stützelementstab mit seinem freien Ende in eine nach unten offene Stütztasche der Kippbrücke eingreifen, wenn die Kippbrücke von oben her in ihre Wartungskippstellung einrückt. Der Stützelementstab kann dann, wenn er von der Stütztasche in Eingriff genommen worden ist, die Kippbrücke in der Wartungskippstellung abstützen. Nachteilig an dieser bekannten Lösung ist es, dass die Sicherungsstützeinrichtung seitlich außen am Rahmen relativ viel Platz beansprucht, wo auch andere Komponenten des Kipperfahrzeugs, wie z.B. Kotflügelbögen, Befestigungskonsolen usw. vorteilhaft zu positionieren wären. Ein weiterer Nachteil der bekannten Lösung besteht darin, dass die Kippbrücke einseitig und asymmetrisch in ihrer Wartungskippstellung abgestützt ist, was entsprechend unsymmetrische Kraftverteilungen an der Kippbrücke und deren Kipplager bedeuten und gegebenenfalls zu einem geometrischen Verzug der Kippbrücke führen kann. Hinzu kommt, dass der Stützelementstab so zu justieren ist, dass er in seiner Stützstellung stets exakt die Stütztasche beim Absenken der Kippbrücke in die Wartungsstellung trifft.

Aus der EP 1 457 381 A2 ist ein weiterer Kipperaufbau der vorstehend genannten Art bekannt. Auch dieser bekannte Kipperaufbau weist eine Sicherungsstützeinrichtung mit einem länglichen Stützstab als Stützelement auf, der um eine quer zur Längsrichtung der Längsträger verlaufende Schwenkachse zwischen einer heruntergeklappten Passivstellung und einer hochgestellten Stützstellung bewegbar ist. Der längliche Stützstab ist bei diesem gattungsgemäßen Kipperaufbau zwischen den Längsträgern des Rahmens angeordnet, dies allerdings asymmetrisch in Bezug auf die Mitte zwischen den Längsträgern. In entsprechender Weise kann es bei Abstützung der Kippbrücke mittels des Stützstabs zu entsprechend asymmetrischen Kraftverteilungen an der Kippbrücke und deren Kipplager kommen.

Ein weiterer Kipperaufbau mit einem länglichen Stützstab als Stützelement einer Sicherungsstützeinrichtung ist aus der US 3 157 435 bekannt. Auch dieser Stützstab ist um eine quer zur Längsrichtung der Längsträger des Rahmens verlaufende Schwenkachse zwischen einer heruntergeklappten Passivstellung und einer hochgeklappten Stützstellung schwenkbar an dem Rahmen gelagert. Der Stützstab ist hierzu mittig zwischen den Längsträgern des Rahmens in einer gemeinsamen vertikalen Ebene mit dem Kippantriebszylinder der Kippbrücke in Platzkonkurrenz zu diesem angeordnet, so dass die vorstehend beschriebenen Probleme asymmetrischer Kraftverteilungen an der Kippbrücke und deren Kipplager bei entsprechender Abstützung der Kippbrücke zwar vermieden werden können, jedoch die Zugänglichkeit des Stützstabes zu dessen manueller Einstellung in die Stützstellung bzw. in die Passivstellung sehr ungünstig ist. Die Bedienungsperson muss hierzu von der Seite her bis in den Breitenmittenbereich des Rahmens greifen, um den Stützstab zu erreichen.

Ein Nachteil all dieser bekannten Lösungen mit einem schwenkbaren Stützstab zum Abstützen der Kippbrücke in ihrer Wartungsstellung besteht darin, dass die Handhabung und Einstellung des betreffenden Stützstabes in dessen Stützstellung bisweilen mühsam und unkomfortabel ist, da die jeweilige Bedienungsperson den Stützstab aus dessen Passivstellung heraus exakt gezielt in die Stützstellung justieren muss, damit das von seiner Schwenkachse entfernte Ende des Stützstabs exakt mit einem dazu komplementären Eingriffsmittel an der Unterseite der Kippbrücke zusammentrifft, wenn die Kippbrücke aus einer Stellung mit größerem Kippwinkel in Richtung ihrer abgesenkten Stellung verschwenkt wird, um die Wartungsstützstellung zu erreichen. Dabei muss die Bedienungsperson sichergehen, dass der Eingriff zwischen dem freien Ende des Stützstabs und dem dazu komplementären Eingriffsmittel an der Unterseite der Kippbrücke sicher und bestimmungsgemäß stattfindet. Kommt es nicht zu einem solchen gesicherten Eingriff, kann erhöhte Unfallgefahr bestehen, beispielsweise durch unbeabsichtigtes unkontrolliertes Zurückklappen des Stützstabes in die Passivstellung.

Der Erfindung liegt die Aufgabe zu Grunde, einen gattungsgemäßen Kipperaufbau mit einer hinsichtlich Raumbedarf und Funktion verbesserten Sicherungsstützeinrichtung bereitzustellen.

Zur Lösung dieser Aufgabe wird ein Kipperaufbau mit den Merkmalen des Anspruchs 1 vorgeschlagen, nämlich ein
Kipperaufbau für ein Lastentransportfahrzeug,
umfassend
- einen Rahmen mit zwei Längsträgern die im wesentlichen parallel zueinander und mit Abstand dazwischen verlaufen,
- eine Kippbrücke die in einem Kippbereich zwischen einer abgesenkten Stellung und einer angehobenen Kippstellung um eine heckseitige, quer zu den Längsträgern verlaufende Kippachse schwenkbar an dem Rahmen angeordnet ist, wobei sie in der abgesenkten Stellung in Längsrichtung der Längsträger orientiert am Rahmen abgestützt ist, und
- eine Sicherungsstützeinrichtung zur bedarfsweisen Abstützung der Kippbrücke in einer zwischen der abgesenkten Stellung und der angehobenen Kippstellung liegenden Wartungskippstellung,
wobei die Sicherungsstützeinrichtung ein zwischen einer Passivstellung und einer Stützstellung verstellbares Stützelement aufweist, welches in der Passivstellung außerhalb des Kippbereichs der Kippbrücke liegt, und welches dazu eingerichtet ist, in seiner Stützstellung die Kippbrücke in deren Wartungskippstellung gegenüber dem Rahmen abzustützen, wobei das Stützelement zwischen den Längsträgern angeordnet ist, und wobei der Kipperaufbau gekennzeichnet ist durch eine Führungseinrichtung zur geführten Aufnahme der Kippbrücke in die abgesenkte Stellung, wobei die Führungseinrichtung wenigstens ein rahmenseitiges, zwischen den Längsträgern angeordnetes Führungselement aufweist, welches über den in der bestimmungsgemäßen Anordnung des Kipperaufbaus auf dem Lastentransportfahrzeug oben liegenden Rand der Längsträger hinweg nach oben vorsteht und dazu eingerichtet ist, mit einem kippbrückenseitigen Führungselement zusammenzuwirken, um die Kippbrücke bei deren Bewegung in die abgesenkte Stellung zu führen, wobei das Stützelement der Sicherungsstützeinrichtung derart an dem Rahmen verstellbar angeordnet ist, dass es in seiner Stützstellung auf dem rahmenseitigen Führungselement der Führungseinrichtung aufliegt, so dass es für die Kippbrücke eine Barriere bildet, welche das Absinken der Kippbrücke in die abgesenkte Stellung verhindert und die Kippbrücke in deren Wartungskippstellung abstützt.

Die erfindungsgemäße Lösung erlaubt eine platzsparende Unterbringung der Sicherungsstützeinrichtung im Bereich zwischen den Längsträgern, welcher für andere Fahrzeugkomponenten normalerweise nicht freigehalten werden muss. Die Sicherungsstützeinrichtung kann an diesem Einbauort insbesondere so ausgestaltet sein, dass sie eine symmetrische Abstützung der Kippbrücke in Bezug auf eine vertikale und in Längsrichtung der Längsträger mittig zwischen ihnen verlaufende Ebene in der Wartungskippstellung ermöglicht.

Vorzugsweise hat der Kipperaufbau eine Führungseinrichtung zur geführten Aufnahme der Kippbrücke in die abgesenkte Stellung, wobei die Führungseinrichtung wenigstens ein rahmenseitiges, zwischen den Längsträgern angeordnetes Führungselement aufweist, welches über den in der bestimmungsgemäßen Anordnung des Kipperaufbauaus auf dem Lastentransportfahrzeug oben liegenden Rand der Längsträger hinweg nach oben vorsteht und dazu eingerichtet ist, mit einem kippbrückenseitigen Führungselement zusammenzuwirken, um die Kippbrücke bei deren Bewegung in die abgesenkte Stellung zu führen, wobei das Stützelement der Sicherungsstützeinrichtung derart an dem Rahmen verstellbar angeordnet ist, dass es in seiner Stützstellung auf dem rahmenseitigen Führungselement der Führungseinrichtung aufliegt, so dass es für die Kippbrücke eine Barriere bildet, welche das Absinken der Kippbrücke in die abgesenkte Stellung verhindert und die Kippbrücke in deren Wartungskippstellung abstützt.

Da das Führungselement nach oben über den Rahmen hinweg absteht, erfüllt es eine Abstandshalterfunktion betreffend den Abstand zwischen der in der Wartungskippstellung auf dem in Stützstellung befindlichem Stützelement aufliegenden Unterseite der Kippbrücke und der Rahmenoberseite. Dieser Abstand kann in vorteilhafter Weise genutzt werden, um einen relativ großen Schrägstellungswinkel der Kippbrücke in der Wartungskippstellung mit einer relativ kompakt aufgebauten Sicherungsstützeinrichtung zu realisieren. Dies auch bereits, wenn die Kippbrücke unmittelbar mit ihrer Unterseite auf dem in Stützstellung befindlichen Stützelement aufliegt. Der Abstandseffekt und damit der Schrägstellungswinkel der Kippbrücke in der Wartungskippstellung kann noch auf vorteilhafte Weise vergrößert werden, wenn das kippbrückenseitige Führungselement an der Unterseite der Kippbrücke über deren unteren Rand hinweg nach unten absteht, wobei es in der Wartungskippstellung der Kippbrücke auf dem Stützelement der Sicherungsstützeinrichtung aufliegt und daran abgestützt ist, wenn sich das Stützelement in seiner Stützstellung befindet. In diesem Fall bilden die Überstände des rahmenseitigen Führungselementes und des kippbrückenseitigen Führungselementes und die Dicke des dazwischen liegenden Teils des Stützelementes einen gemeinsamen größeren Abstand zwischen der Unterseite der Kippbrücke und der Rahmenoberseite, woraus ein entsprechend größerer Schrägstellungswinkel für die Kippbrücke in deren Wartungskippstellung resultiert.

Besonders bevorzugt ist eine Ausführungsform der Erfindung, bei der die Führungseinrichtung zwei rahmenseitige Führungselemente mit Überstand nach oben umfasst, die einander gegenüberliegend an einander zugewandten Seiten der Längsträger in einer vorzugsweise symmetrischen Anordnung angeordnet sind und einen Abstand zwischen sich aufweisen, wobei sich das Stützelement quer zur Längsrichtung der Längsträger über den Abstand zwischen den rahmenseitigen Führungselementen hinweg erstreckt, so dass die rahmenseitigen Führungselemente das Stützelement in dessen Stützstellung gemeinsam abstützen können. Eine solche Lösung erlaubt eine gleichmäßigere Kraftverteilung bei der Krafteinleitung der in der Wartungskippstellung auf dem Stützelement lastenden Gewichtskraft der Kippbrücke in den Rahmen. Dieser Effekt kann noch verbessert werden, wenn zwei kippbrückenseitige Führungselemente der Führungseinrichtung an der Unterseite der Kippbrücke in einer symmetrischen Anordnung über deren unteren Rand hinweg nach unten abstehen, wobei sie in der Wartungskippstellung der Kippbrücke auf dem Stützelement der Sicherungsstützeinrichtung aufliegen und daran abgestützt sind, wenn das Stützelement in seiner Stützstellung ist. Eine solche Variante mit zwei rahmenseitigen Stützelementen und zwei kippbrückenseitigen Stützelementen stellt eine besonders bevorzugte Möglichkeit einer symmetrischen Abstützung der Kippbrücke am Rahmen mittels einer kompakten Sicherungsstützeinrichtung dar.

Die kippbrückenseitigen Führungselemente sind gemäß einer Ausführungsform der Erfindung seitlich überlappend mit den rahmenseitigen Führungselementen zwischen diesen aufgenommen, wenn die Kippbrücke in ihrer abgesenkten Stellung ist. Auf diese Weise ist eine sehr gute seitliche Stabilisierung der Kippbrücke in der abgesenkten Stellung mit einfachen Mitteln möglich.

Die rahmenseitigen Führungselemente und die kippbrückenseitigen Führungselemente können in an sich bekannter Weise einander komplementäre Schrägflächen als Führungsflächen zum Einführen der Kippbrücke in ihre abgesenkte Stellung aufweisen.

Gemäß einer bevorzugten Ausführungsform der Erfindung ist das Stützelement der Sicherungsstützeinrichtung vermittels einer Schwenklageranordnung schwenkbeweglich um eine vorzugsweise quer zur Längsrichtung der Längsträger verlaufende Schwenkachse zwischen der Passivstellung und der Stützstellung gelagert.

Die Schwenklageranordnung bzw. die betreffenden Komponenten davon sind gemäß einer betreffenden Variante der Erfindung an den einander gegenüberliegenden rahmenseitigen Führungselementen der Führungseinrichtung befestigt. Dies erlaubt eine gemeinsame Vormontage der Führungselemente und der Schwenklageranordnungskomponenten aneinander.

Das schwenkbare Stützelement hat vorzugsweise eine U-förmige Kontur mit zwei Halteschenkeln und einer die Halteschenkel verbindenden Querstrebe, wobei die Halteschenkel an ihren von der Querstrebe entfernten Enden schwenkbeweglich an der Schwenklageranordnung befestigt sind und wobei die Querstrebe in der Stützstellung des Stützelementes auf den rahmenseitigen Führungselementen der Führungseinrichtung aufliegt und daran abgestützt ist. Diese Konstruktion ist sehr einfach und Platz sparend realisierbar und erlaubt eine zuverlässige Funktion der Sicherungsstützeinrichtung.

Zum Zwecke einer bequemen Bedienung der Sicherungsstützeinrichtung von einer Außenseite des Rahmens her wird vorgeschlagen, dass die Stützeinrichtung wenigstens einen Betätigungshebel aufweist, der seitlich nach außen über den Rand wenigstens eines der Längsträger hinaus absteht, so dass er zum Verstellen des Stützelementes von einer lateralen Seite des Rahmens her von einer Bedienungsperson manuell betätigbar ist und die Bedienungsperson dabei nicht in einen Bereich zwischen den Längsträgern und unmittelbar über den Längsträgern, der von der Kippbrücke bei deren Bewegung in die abgesenkte Stellung eingenommen wird, greifen muss. Der Betätigungshebel ist vorzugsweise unmittelbar mit dem Stützelement verbunden und als Drehhebel mit einer zur Schwenkachse des Stützelementes koaxialen Drehachse ausgebildet. Ein solcher Betätigungshebel nimmt sehr wenig Platz in Anspruch und erlaubt eine bequeme Bedienung der Sicherungsstützeinrichtung.

Der Kippwinkel oder Schrägstellungswinkel der Kippbrücke zwischen der abgesenkten Stellung und der Wartungskippstellung sollte in einem Bereich zwischen 5° und 12°, vorzugsweise zwischen 7° und 10° liegen, wobei andere Winkelgrößen nicht ausgeschlossen sein sollen.

Gegenstand der Erfindung ist auch ein Kipperfahrzeug mit einem Kipperaufbau nach einem der vorhergehenden Ansprüche.

Die Erfindung wird nachstehend unter Bezugnahme auf die Zeichnungen näher erläutert.
Fig. 1 zeigt in einer Seitenansicht ein Beispiel eines Kipperaufbaus der hier betrachteten Art mit in abgesenkter Stellung befindlicher Kippbrücke (mit durchgezogenen Linien eingezeichnet), wobei mit Strichpunktlinien auch die Wartungskippstellung der Kippbrücke angedeutet ist.
Fig. 2 zeigt in perspektivischer Ausschnittsdarstellung mit Blickrichtung von schräg oben einen Bereich des Rahmens des Kipperaufbaus mit der Sicherungsstützeinrichtung, wobei das Stützelement in seiner Passivstellung dargestellt ist und wobei die Kippbrücke und ein Scherenstabilisator aus Gründen der Übersichtlichkeit der Darstellung in Fig. 2 nicht eingezeichnet sind.
Fig. 3 zeigt in einer perspektivischen Ausschnittdarstellung mit Blickrichtung von schräg unten einen Bereich des Kipperaufbaus nach der Erfindung, wobei das Stützelement der Sicherungsstützeinrichtung in seiner Passivstellung- und die Kippbrücke in ihrer abgesenkten Stellung eingezeichnet sind.
Fig. 4 zeigt in perspektivischer Ausschnittsdarstellung mit Blickrichtung von schräg oben einen Bereich des Rahmens des Kipperaufbaus mit der Sicherungsstützeinrichtung, wobei das Stützelement in seiner Stützstellung dargestellt ist und wobei die Kippbrücke und der Scherenstabilisator aus Gründen der Übersichtlichkeit der Darstellung in Fig. 2 nicht eingezeichnet sind.
Fig. 5 zeigt in einer perspektivischen Ausschnittsdarstellung mit Blickrichtung von schräg unten einen Bereich des Kipperaufbaus, wobei das Stützelement der Sicherungsstützeinrichtung in seiner Stützstellung- und die Kippbrücke in ihrer Wartungskippstellung eingezeichnet sind.
Fig. 6 zeigt in einer Seitenansicht ein Beispiel eines Kipperaufbaus mit einer Sicherungsstützeinrichtung nach dem Stand der Technik.

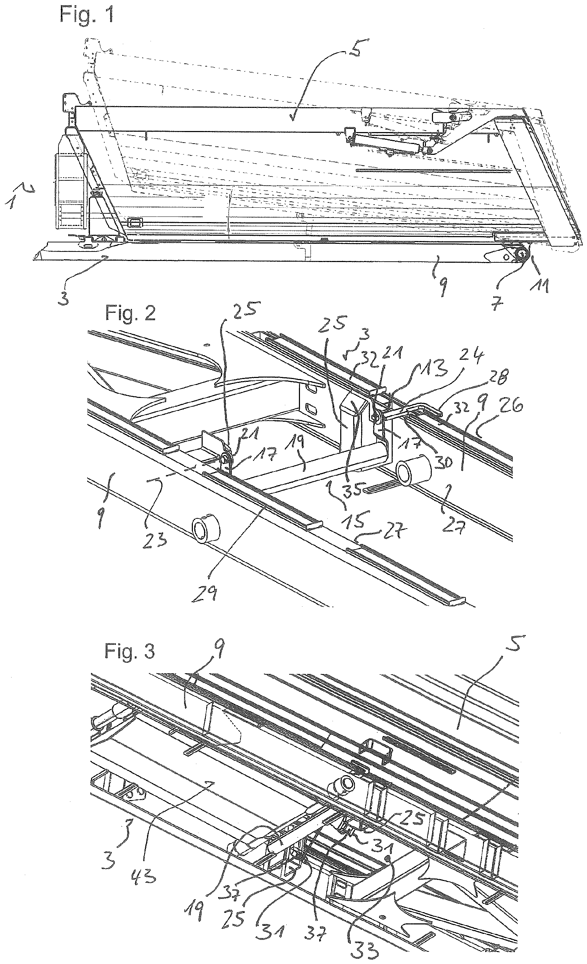

Fig. 1 zeigt ein Beispiel für einen Kipperaufbau nach der Erfindung, der für ein Lastentransportfahrzeug (nicht gezeigt) vorgesehen ist, um dieses zu einem Kipperfahrzeug auszurüsten.

Der Kipperaufbau hat einen Rahmen 3, der gelegentlich auch als Hilfsrahmen bezeichnet wird, sowie eine Kippbrücke 5 die zwischen der in Fig. 1 mit durchgezogenen Linien eingezeichneten abgesenkten Stellung und einer angehobenen Kippstellung (nicht dargestellt) um eine Kippachse 7 schwenkbar an dem Rahmen 3 angeordnet ist. Die Kippachse 7 verläuft quer zu zwei Längsträgern 9 (vgl. Fig. 2) des Rahmens 3 an dessen in Fig. 1 rechten Ende 11, welches im Endmontagezustand an dem Kipperfahrzeug das heckseitige Ende darstellt.

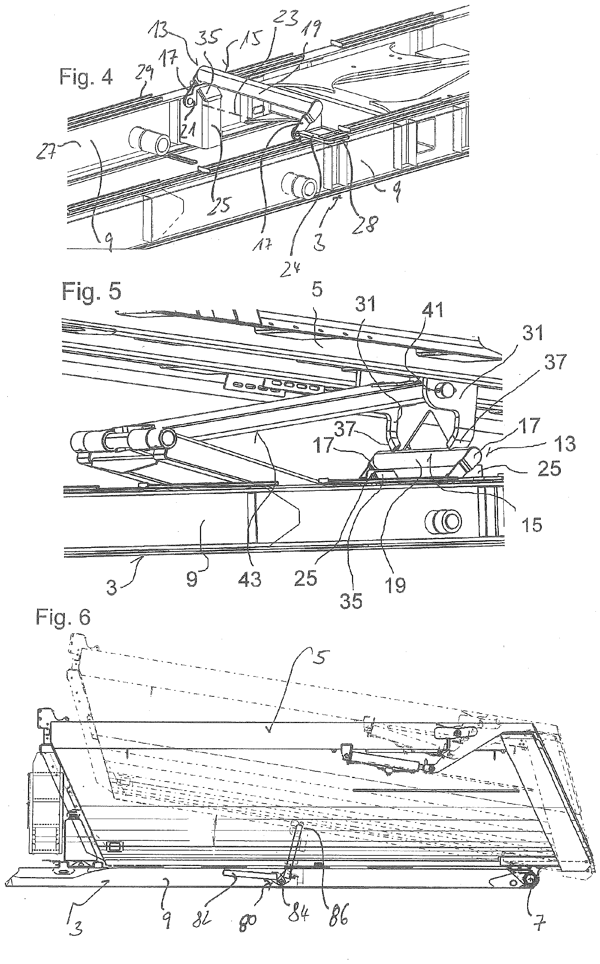

Bestimmte gelegentlich durchzuführende Wartungsarbeiten an dem Kipperfahrzeug, wie etwa Abschmierarbeiten, Reinigungsarbeiten oder Justierarbeiten, erfordern einen freien Zugang von oben her zu einem Bereich zwischen den Längsträgern 9 des Rahmens 3. Dieser Zugang ist von der Kippbrücke 5 versperrt, wenn sie sich in ihrer abgesenkten Stellung befindet. Zwar könnte der geforderte Zugang verschafft werden, indem die Kippbrücke z.B. in ihre angehobenen Kippstellung verschwenkt und in dieser Stellung gehalten wird. Diese üblicherweise mittels hydraulischer Antriebe und Ventileinrichtungen unter Hydraulikdruck erfolgende Vorgehensweise ist aus verschiedenen Gründen nicht erwünscht, wenn es nur darum geht, den Zugang zu dem Bereich zwischen den Längsträgern 9 des Rahmens 3 für die Wartungsarbeiten zu verschaffen und in gesicherter Weise aufrecht zu erhalten. Aus diesem Grunde hat man auch bisher schon Sicherungsstützeinrichtungen verwendet, die die Kippbrücke in einer zwischen der abgesenkten Stellung und der angehobenen Kippstellung liegenden Wartungskippstellung mechanisch abstützen können. In dieser Wartungskippstellung ist die Kippbrücke 5 um einen Kippwinkel von z.B. 8° gegenüber der abgesenkten Stellung angehoben, wie dies in den Figuren 1 und 6 mit Strichpunktlinien angedeutet ist. Zum Einstellen der Kippbrücke 5 in die Wartungskippstellung wird die Kippbrücke 5 zunächst über die Wartungskippstellung hinaus um die Kippachse 7 nach oben verschwenkt. Sodann wird ein Stützelement der Sicherungsstützeinrichtung in eine Stützstellung bewegt, in der es im Absenkweg der Kippbrücke liegt. Daraufhin wird die Kippbrücke 5 wieder abgesenkt, bis sie auf das Stützelement der Sicherungsstützeinrichtung trifft und somit in die Wartungskippstellung eingerückt ist.

Fig. 6 zeigt einen entsprechenden Kipperaufbau mit einer Sicherungsstützeinrichtung 80 nach dem Stand der Technik. Abgesehen von der Sicherungsstützeinrichtung gleicht der Kipperaufbau nach Fig. 6 dem Kipperaufbau nach Fig. 1, so dass für die einander gleichen Komponenten gleiche Bezugszeichen zu deren Kennzeichnung in den Figuren verwendet wurden.

Die bekannte Sicherungsstützeinrichtung 80 aus Fig. 6 ist seitlich außen an einem der Längsträger 9 des Rahmens 3 angeordnet und weist ein Stützelement 82 in Form eines länglichen Stabes auf, der an einem seiner Längsenden schwenkbeweglich um eine quer zu den Längsträgern 9 verlaufende Schwenkachse 84 an dem betreffenden Längsträger 9 gelagert ist, so dass er zwischen der in Fig. 6 heruntergeklappt gezeigten Passivstellung und der in Fig. 6 hochgestellt eingezeichneten Stützstellung bewegbar ist. In der Stützstellung kann der Stützelementstab 82 mit seinem freien Ende in einer nach unten offene Stütztasche 86 der Kippbrücke 5 aufgenommen werden, wenn die Kippbrücke in ihre Wartungskippstellung von oben her einrückt. Der Stützelementstab 82 kann dann, wenn er von der Stütztasche 86 in Eingriff genommen worden ist, die Kippbrücke 5 in der Wartungskippstellung abstützen. Nachteilig an dieser bekannten Lösung ist es, dass die Sicherungsstützeinrichtung 80 dort relativ viel Platz beansprucht, wo auch andere Komponenten des Kipperfahrzeugs, wie z.B. Kotflügelbögen, Befestigungskonsolen usw. vorteilhaft zu positionieren wären. Ein weiterer Nachteil der bekannten Lösung besteht darin, dass die Kippbrücke 5 einseitig und asymmetrisch in ihrer Wartungskippstellung abgestützt ist, was entsprechend unsymmetrische Kraftverteilungen an der Kippbrücke 5 und deren Kipplager bedeuten und gegebenenfalls zu einem geometrischen Verzug der Kippbrücke führen kann. Hinzu kommt, dass der Stützelementstab 82 so zu justieren ist, dass er in seiner Stützstellung stets exakt die Stütztasche 86 beim Absenken der Kippbrücke 5 in die Wartungskippstellung trifft. Wie eingangs bereits dargelegt, sind aus dem Stand der Technik auch bereits Kipperaufbauten bekannt, bei denen ein solcher Stützelementstab zwischen den Längsträgern des Rahmens schwenkbar angeordnet ist. Bei solchen Kipperaufbauten ist das Problem der unsymmetrischen Kraftverteilungen an der Kippbrücke und deren Kipplager bei Abstützung der Kippbrücke in der Wartungsstellung an dem hochgeschwenkten Stützelementstab abgemildert, nicht jedoch das Problem der unbequemen und unsicheren Handhabung des Stützelementstabs.

Bei dem Kipperaufbau 1 nach der Erfindung sind diese Nachteile überwunden. Er weist eine Sicherungsstützeinrichtung 13 mit einem innen zwischen den beiden Längsträgern 9 angeordneten Stützelement 15 auf. Das Stützelement 15 hat eine U-förmige Kontur mit zwei Halteschenkeln 17 und einer die Halteschenkel 17 verbindenden Querstrebe 19. An den abstehenden Enden der Halteschenkel 17 ist das Stützelement 15 schwenkbeweglich vermittels einer betreffenden Schwenklageranordnung 21 an dem Rahmen 3 fixiert, so dass es zwischen der in Fig. 2 und Fig. 3 gezeigten Passivstellung und der in Fig. 4 und Fig. 5 gezeigten Stützstellung um die quer zu den Längsträgern 9 verlaufende Schwenkachse 23 schwenkbar ist.

Zur Betätigung des Stützelementes 15 ist ein seitlich nach außen über den seitlich äußeren Rand 26 eines der Längsträger 9 hinaus von einem der Halteschenkel 17 abstehender Drehhebel 24 vorgesehen, dessen Drehachse mit der Schwenkachse 23 des Stützelementes 15 zusammenfällt. Der Drehhebel 24 ist sehr klein und hakenartig mit einem äußeren abgewinkelten Betätigungsgriff 28 ausgebildet und nimmt sehr wenig Platz in Anspruch. Er erstreckt sich durch eine Lücke 30 zwischen zwei oberen Auflagegummistreifen 32, die zur Abstützung der Kippbrücke 5 an der Rahmenoberseite dienen. Durch Drehen an dem Betätigungsgriff 28 kann das Stützelement 15 zwischen seiner Passivstellung und seiner Stützstellung verstellt werden.

In der Passivstellung ist das Stützelement 15 soweit innen zwischen den Längsträgern 9 abgesenkt, dass es das Einrücken der Kippbrücke 5 in deren abgesenkte Stellung nicht behindert. In der Stützstellung ist das Stützelement 15 jedoch in den Absenkweg der Kippbrücke 5 gestellt, so dass die Kippbrücke 5 nicht über die Wartungskippstellung hinweg abgesenkt werden kann. In der Wartungskippstellung wird die Kippbrücke 5 bei in Stützstellung befindlichem Stützelement 15 sicher von letzterem abgestützt.

In der Stützstellung liegt das Stützelement 15 mit seiner Querstrebe 19 auf zwei rahmenseitigen Führungselementen 25 einer Führungseinrichtung zur geführten Aufnahme der Kippbrücke 5 in die abgesenkte Stellung auf. Die rahmenseitigen Führungselemente 25 sind einander gegenüberliegend an den einander zugewandten Seiten 27 der Längsträger 9 am Rahmen 3 befestigt und weisen einen Abstand zwischen sich auf. Beide rahmenseitigen Führungselemente 25 stehen nach oben hin über den oberen Rand 29 der Längsträger 9 hinweg vor und können somit eine Abstandshaltefunktion für das Stützelement 15 zur Einhaltung eines Abstandes gegenüber dem oberen Rand 29 der Längsträger 9 erfüllen, wenn das Stützelement 15 in seiner Stützstellung auf den rahmenseitigen Führungselementen 25 aufliegt.

Als Komplementärkomponenten zu den rahmenseitigen Führungselementen 25 sind kippbrückenseitige Führungselemente 31 an der Kippbrücke 5 vorgesehen. Die kippbrückenseitigen Führungselemente 31 stehen an der Unterseite der Kippbrücke 5 über deren unteren Rand 33 hinweg nach unten ab. In der Wartungskippstellung liegt die Kippbrücke 5 mit ihren kippbrückenseitigen Führungselementen 31 auf der Querstrebe 19 des Stützelementes 15 auf (vgl. Fig 5). Die kippbrückenseitigen Führungselemente 31 erfüllen ebenfalls eine Abstandshalterfunktion, nämlich betreffend den Abstand der Kipprückenunterseite 33 zu der auf den rahmenseitigen Führungselementen 25 aufliegenden Querstrebe 19 des in seiner Stützstellung befindlichen Stützelementes 15.

Durch Nutzung der Abstandshaltefunktionen der rahmenseitigen Führungselemente 25 und der kippbrückenseitigen Führungselemente 31 lässt sich ein vergleichsweise großer Winkel für eine gesicherte Wartungskippstellung der Kippbrücke 5 relativ zur abgesenkten Stellung erzielen, und dies mit einer Sicherungsstützeinrichtung 13, deren Abmessungen und deren Bewegungsbereich klein sind und die sich am Rahmen 3 in einem normalerweise nicht für andere Fahrzeugkomponenten frei zu haltenden Bereich fast komplett zwischen den Längsträgern 9 befindet.

In seiner Stützstellung ist das Stützelement 15 bei in Wartungskippstellung befindliche Kippbrücke 5 so zwischen der Unterlage (Führungselemente 25) und der Auflage (Kippbrücke 5 mit Führungselementen 31) eingeklemmt, dass es sicher in der Stützstellung verbleibt, bis die Kippbrücke 5 durch Betätigung des hydraulischen Hubantriebs (nicht gezeigt) aus der Wartungskippstellung heraus angehoben wird. Die Sicherungsstützeinrichtung 13 stellt somit gemeinsam mit der Kippbrücke 5 ein sicheres selbsthaltendes System in Bezug auf die kombinierte Einstellung Stützstellung des Stützelementes 15 und Wartungskippstellung der Kippbrücke 5.

Die kippbrückenseitigen Führungselemente 31 sind quer zu den Längsträgern 9 einander gegenüberliegend so an der Unterseite der Kippbrücke 5 angeordnet, dass sie beim Einrücken der Kippbrücke 5 in die abgesenkte Stellung genau zwischen die rahmenseitigen Führungselemente 25 passen und diesen in der abgesenkten Stellung der Kippbrücke 5 seitlich gegenüberliegen. Die rahmenseitigen Führungselemente 25 weisen obere Schrägflächen 35 auf, wohingegen die kippbrückenseitigen Führungselemente 31 untere Schrägflächen 37 haben, die komplementär zu den Schrägflächen 35 ausgebildet sind, so dass die rahmenseitigen Führungselemente 25 mit ihren oberen Schrägflächen 35 die kippbrückenseitigen Führungselemente 31 an deren unteren Schrägflächen 37 führen können, um die Kippbrücke 5 in die abgesenkte Stellung einzuweisen.

Die Führungselemente 25, 31 haben somit im Rahmen des gezeigten Ausführungsbeispiels der Erfindung eine Mehrfachfunktion, nämlich die Funktion der sicheren Einleitung der Kippbrücke 5 in die abgesenkte Stellung sowie die Funktion als seitliche Anschläge zur seitlichen Stabilisierung, der Kippbrücke 5 in der abgesenkten Stellung und schließlich der oben erläuterten Abstandshaltefunktion zur Realisierung eines hinreichend großen Schrägstellungswinkels der Kippbrücke 5 in der Wartungskippstellung. Desweiteren sind die Komponenten der Schwenkklageranordnung 21 zur schwenkbeweglichen Lagerung des Stützelementes 15 der Sicherungsstützeinrichtung 13 an den rahmenseitigen Führungselementen 25 vorgesehen. Dies bedeutet, dass die Komponenten der Schwenklageanordnung 21 vormontiert an den rahmenseitigen Führungselementen 25 zu deren Montage an den Längsträgern 9 bereitgestellt werden können.

Wie aus Fig. 5 gut zu erkennen ist, sind die kippbrückenseitigen Führungselemente 31 ferner so ausgebildet, dass sie ein Gelenklager 41 für die gelenkige Anordnung des oberen Endes eines Scherenstabilisators 43 aufweisen. Derartige Scherenstabilisatoren 43 zur seitlichen Stabilisierung der Kippbrücke 5 bei deren Kippbewegungen sind an sich bekannt und werden daher hier nicht weiter beschrieben.

Aufgrund der in Bezug auf eine vertikal und in Rahmenlängsrichtung mittig zwischen den Rahmenlängsträgern 9 verlaufenden Ebene zumindest weitgehend symmetrisch angeordneten Komponenten der Sicherungsstützeinrichtung 13 und der damit zusammenwirkenden Komponenten 25, 31 der Führungseinrichtung ergibt sich eine entsprechend symmetrische Abstützung der Kippbrücke 5 in ihrer Wartungskippstellung durch die Sicherungsstützeinrichtung 13 und die damit zusammenwirkenden Komponenten 25, 31 der Führungseinrichtung. Auf diese Weise ist ein Verzug oder eine Torsionsbelastung der abgestützten Kippbrücke in der Wartungskippstellung sicher zu vermeiden.

## Patentansprüche

1. Kipperaufbau für ein Lastentransportfahrzeug,
umfassend
- einen Rahmen (3) mit zwei Längsträgern (9), die im wesentlichen parallel zueinander und mit Abstand dazwischen verlaufen,
- eine Kippbrücke (5), die in einem Kippbereich zwischen einer abgesenkten Stellung und einer angehobenen Kippstellung um eine heckseitige, quer zu den Längsträgern (9) verlaufende Kippachse (7) schwenkbar an dem Rahmen (3) angeordnet ist, wobei sie in der abgesenkten Stellung in Längsrichtung der Längsträger (9) orientiert am Rahmen (3) abgestützt ist,
und
- eine Sicherungsstützeinrichtung (13) zur bedarfsweisen Abstützung der Kippbrücke (5) in einer zwischen der abgesenkten Stellung und der angehobenen Kippstellung liegenden Wartungskippstellung,
wobei die Sicherungsstützeinrichtung ein zwischen einer Passivstellung und einer Stützstellung verstellbares Stützelement (15) aufweist, welches in der Passivstellung außerhalb des Kippbereichs der Kippbrücke (5) liegt, und welches dazu eingerichtet ist, in seiner Stützstellung die Kippbrücke (5) in deren Wartungskippstellung gegenüber dem Rahmen (3) abzustützen, wobei
das Stützelement (15) zwischen den Längsträgern (9) angeordnet ist, **gekennzeichnet durch** eine Führungseinrichtung zur geführten Aufnahme der Kippbrücke (5) in die abgesenkten Stellung, wobei die Führungseinrichtung wenigstens ein rahmenseitiges, zwischen den Längsträgern angeordnetes Führungselement (25) aufweist, welches über den in der bestimmungsgemäßen Anordnung des Kipperaufbaus auf dem Lastentransportfahrzeug oben liegenden Rand (29) der Längsträger hinweg nach oben vorsteht und dazu eingerichtet ist, mit einem kippbrückenseitigen Führungselement (31) zusammenzuwirken, um die Kippbrücke (5) bei deren Bewegung in die abgesenkte Stellung zu führen, wobei das Stützelement (15) der Sicherungsstützeinrichtung derart an dem Rahmen (3) verstellbar angeordnet ist, dass es in seiner Stützstellung auf dem rahmenseitigen Führungselement (25) der Führungseinrichtung aufliegt, so dass es für die Kippbrücke (5) eine Barriere bildet, welche das Einrücken der Kippbrücke (5) in die abgesenkte Stellung verhindert und die Kippbrücke (5) in deren Wartungskippstellung abstützt.

2. Kipperaufbau nach Anspruch 1, wobei das kippbrückenseitige Führungselement (31) an der Unterseite (33) der Kippbrücke (5) über deren unteren Rand hinweg nach unten absteht, wobei es in der Wartungskippstellung der Kippbrücke (5) auf dem Stützelement (15) der Sicherungsstützeinrichtung aufliegt und daran abgestützt ist, wenn sich das Stützelement (15) in seiner Stützstellung befindet.

3. Kipperaufbau nach Anspruch 1 oder 2, wobei die Führungseinrichtung zwei rahmenseitige Führungselemente (25) umfasst, die einander gegenüberliegend an einander zugewandten Seiten (27) der Längsträger (9) angeordnet sind und einen Abstand zwischen sich aufweisen, und wobei sich das Stützelement (15) quer zur Längsrichtung der Längsträger (9) über den Abstand zwischen den rahmenseitigen Führungselementen (25) hinweg erstreckt, so dass die rahmenseitigen Führungselemente (25) das Stützelement (15) in dessen Stützstellung gemeinsam abstützen können.

4. Kipperaufbau nach Anspruch 2 und 3, wobei zwei kippbrückenseitige Führungselemente (31) der
Führungseinrichtung an der Unterseite (33) der Kippbrücke (5) über deren unteren Rand hinweg nach unten abstehen, wobei sie in der Wartungskippstellung der Kippbrücke (5) auf dem Stützelement (15) der Sicherungsstützeinrichtung aufliegen und daran abgestützt sind, wenn sich das Stützelement (15) in seiner Stützstellung befindet.

5. Kipperaufbau nach Anspruch 4, wobei die kippbrückenseitigen Führungselemente (31) seitlich überlappend mit den rahmenseitigen Führungselementen (25) zwischen diesen aufgenommen sind, wenn die Kippbrücke (5) in ihrer abgesenkten Stellung ist.

6. Kipperaufbau nach Anspruch 4 oder 5, wobei die rahmenseitigen Führungselemente (25) und die kippbrückenseitigen Führungselemente (31) einander komplementäre Schrägflächen (35,37) als Führungsflächen zum Einführen der Kippbrücke (5) in ihre abgesenkte Stellung aufweisen.

7. Kipperaufbau nach einem der vorhergehenden Ansprüche, wobei das Stützelement (15) der Sicherungsstützeinrichtung vermittels einer Schwenklageranordnung (21) schwenkbeweglich um eine Schwenkachse (23) zwischen der Passivstellung und der Stützstellung gelagert ist.

8. Kipperaufbau nach Anspruch 7, wobei die Schwenkachse (23) quer zur Längsrichtung der Längsträger (9) verläuft.

9. Kipperaufbau nach Anspruch 3, 7 und 8, wobei die Schwenklageranordnung (21) an den einander gegenüberliegenden rahmenseitigen Führungselementen (25) der Führungseinrichtung befestigt ist.

10. Kipperaufbau nach Anspruch 9, wobei das Stützelement (15) eine U-förmige Kontur mit zwei Halteschenkeln (17) und einer die Halteschenkel verbindenden Querstrebe (19) aufweist, wobei die Halteschenkel (17) an ihren von der Querstrebe (19) entfernten Enden schwenkbeweglich an der Schwenklageranordnung (21) befestigt sind und wobei die Querstrebe (19) in der Stützstellung des Stützelementes (15) auf den rahmenseitigen Führungselementen (25) der Führungseinrichtung aufliegt und daran abgestützt ist.

11. Kipperaufbau nach einem der vorhergehenden Ansprüche, wobei die Stützeinrichtung wenigstens einen Betätigungshebel (24) aufweist, der seitlich nach außen über den Rand wenigstens eines der Längsträger (9) hinaus absteht, so dass er zum Verstellen des Stützelementes (15) von einer lateralen Seite (26) des Rahmens (3) her von einer Bedienungsperson manuell betätigbar ist und die Bedienungsperson dabei nicht in einen Bereich zwischen den Längsträgern (9) und unmittelbar über den Längsträgern (9), der von der Kippbrücke (5) bei deren Bewegung in die Absenkstellung eingenommen wird, greifen muss.

12. Kipperaufbau nach Anspruch 7 und Anspruch 11, wobei der Betätigungshebel (24) unmittelbar mit dem Stützelement (15) verbunden ist und als Drehhebel mit einer zur Schwenkachse (23) des Stützelementes (15) koaxialen Drehachse ausgebildet ist.

13. Kipperaufbau nach einem der vorhergehenden Ansprüche, wobei der Kippwinkel der Kippbrücke (5) zwischen der abgesenkten Stellung und der Wartungskippstellung zwischen 5° und 12°, insbesondere zwischen 7° und 10° liegt.

14. Lastentransportfahrzeug als Kipperfahrzeug mit einem Kipperaufbau nach einem der vorhergehenden Ansprüche.

## Claims

1. Tipper assembly for a load transport vehicle, comprising
- a frame (3) having two longitudinal beams (9) which extend substantially parallel to one another and at a distance from one another,
- a tipper body (5) which is arranged on the frame (3) in a tipping region between a lowered position and a raised tipping position such that it is pivotable about a rear-side tipping shaft (7) which extends transversely to the longitudinal beams (9), the tipper body being supported on the frame (3) in the lowered position so as to be oriented in the longitudinal direction of the longitudinal beams (9), and
- a safety support device (13) for supporting the tipper body (5) as required in a maintenance tipping position which is between the lowered position and the raised tipping position,
the safety support device comprising a support element (15) which can be adjusted between a passive position and a support position, which is outside the tipping region of the tipper body (5) in the passive position, and which, in its support position, is designed to support the tipper body (5) in the maintenance tipping position with respect to the frame (3), the support element (15) being arranged between the longitudinal beams (9), **characterised by** a guiding device for receiving the tipper body (5) in the lowered position in a guided manner, the guiding device having at least one frame-side guide element (25) arranged between the longitudinal beams, which guide element projects upwards over the edge (29) of the longitudinal beams that is at the top when the tipper assembly is arranged as intended on the load transport vehicle, and is designed to cooperate with a tipper body-side guide element (31) in order to guide the tipper body (5) during the movement thereof into the lowered position, the support element (15) of the safety support device being adjustably arranged on the frame (3) such that, in its support position, it rests on the frame-side guide element (25) of the guiding device such that it forms a barrier for the tipper body (5) that prevents the tipper body (5) from locking into the lowered position and supports the tipper body (5) in the maintenance tipping position.

2. Tipper assembly according to claim 1, wherein the tipper body-side guide element (31) on the underside (33) of the tipper body (5) projects downwards over the lower edge thereof, wherein, in the maintenance tipping position of the tipper body (5), it rests on the support element (15) of the safety support device and is supported thereon when the support element (15) is in its support position.

3. Tipper assembly according to either claim 1 or claim 2, wherein the guiding device comprises two frame-side guide elements (25) which are arranged opposite one another on mutually facing sides (27) of the longitudinal beams (9) and are at distance from one another, and wherein the support element (15) extends transversely to the longitudinal direction of the longitudinal beams (9) over the distance between the frame-side guide elements (25) such that the frame-side guide elements (25) can together support the support element (15) in its support position.

4. Tipper assembly according to claims 2 and 3, wherein two tipper body-side guide elements (31) of the guiding device on the underside (33) of the tipper body (5) project downwards over the lower edge thereof, wherein, in the maintenance tipping position of the tipper body (5), they rest on the support element (15) of the safety support device and are supported thereon when the support element (15) is in its support position.

5. Tipper assembly according to claim 4, wherein the tipper body-side guide elements (31) are received between the frame-side guide elements (25) so as to laterally overlap therewith when the tipper body (5) is in its lowered position.

6. Tipper assembly according to either claim 4 or claim 5, wherein the frame-side guide elements (25) and the tipper body-side guide elements (31) have mutually complementary inclined surfaces (35, 37) as guide surfaces for bringing the tipper body (5) into its lowered position.

7. Tipper assembly according to any of the preceding claims, wherein the support element (15) of the safety support device is mounted by means of a pivot bearing arrangement (21) such that it is pivotable about a pivot axis (23) between the passive position and the support position.

8. Tipper assembly according to claim 7, wherein the pivot axis (23) extends transversely to the longitudinal direction of the longitudinal beams (9).

9. Tipper assembly according to claims 3, 7 and 8, wherein the pivot bearing arrangement (21) is attached to the mutually opposite frame-side guide elements (25) of the guiding device.

10. Tipper assembly according to claim 9, wherein the support element (15) has a U-shaped contour that has two holding arms (17) and a transverse strut (19) which connects the holding arms, wherein the holding arms (17), at their ends that are remote from the transverse strut (19), are pivotally mounted on the pivot bearing arrangement (21) and wherein the transverse strut (19), in the support position of the support element (15), rests on the frame-side guide elements (25) of the guiding device and is supported thereon.

11. Tipper assembly according to any of the preceding claims, wherein the support device comprises at least one actuating lever (24) which projects laterally outwards beyond the edge of at least one of the longitudinal beams (9) such that it can be manually actuated by an operator in order to adjust the support element (15) from a lateral side (26) of the frame (3) and the operator does not have to reach into a region between the longitudinal beams (9) or immediately above the longitudinal beams (9), which region is occupied by the tipper body (5) during its movement into the lowered position.

12. Tipper assembly according to claim 7 and claim 11, wherein the actuating lever (24) is directly connected to the support element (15) and is formed as a rotary lever having an axis of rotation that is coaxial to the pivot axis (23) of the support element (15).

13. Tipper assembly according to any of the preceding claims, wherein the tipping angle of the tipper body (5) between the lowered position and the maintenance tipping position is between 5° and 12°, in particular between 7° and 10°.

14. Load transport vehicle as a tipper truck comprising a tipper assembly according to any of the preceding claims.

## Revendications

1. Superstructure à benne basculante pour un camion,
comprenant
- un châssis (3) avec deux longerons (9), qui s'étendent sensiblement parallèlement l'un à l'autre et avec une distance entre eux,
- un pont basculant (5), qui est agencé au niveau du châssis (3) de manière pivotante autour d'un axe de basculement (7) arrière, s'étendant transversalement aux longerons (9) entre une position abaissée et une position de basculement relevée dans une zone de basculement, dans laquelle il est soutenu au niveau du châssis (3) de manière orientée dans la direction longitudinale des longerons (9) dans la position abaissée,
et
- un dispositif d'appui de sécurité (13) pour le soutien en cas de besoin du pont basculant (5) dans une position de basculement de maintenance située entre la position abaissée et la position de basculement relevée,
dans laquelle le dispositif d'appui de sécurité présente un élément d'appui (15) réglable entre une position passive et une position d'appui, lequel se situe dans la position passive à l'extérieur de la zone de basculement du pont basculant (5), et lequel est aménagé pour soutenir dans sa position d'appui le pont basculant (5) dans sa position de basculement de maintenance par rapport au châssis (3),
dans laquelle
l'élément d'appui (15) est agencé entre les longerons (9),
**caractérisé par** un dispositif de guidage pour la réception guidée du pont basculant (5) dans la position abaissée, dans laquelle le dispositif de guidage présente au moins un élément de guidage côté châssis (25), agencé entre les longerons, qui fait saillie vers le haut au-delà du bord (29) des longerons, situé en haut dans l'agencement conforme à l'utilisation de la superstructure à benne basculante sur le camion et est aménagé pour coopérer avec un élément de guidage côté pont basculant (31) pour guider le pont basculant (5) lors de son déplacement dans la position abaissée, dans laquelle l'élément d'appui (15) du dispositif d'appui de sécurité est agencé de manière réglable au niveau du châssis (3) de sorte qu'il repose dans sa position d'appui sur l'élément de guidage côté châssis (25) du dispositif de guidage, de sorte qu'il forme une barrière pour le pont basculant (5), laquelle empêche l'entrée du pont basculant (5) dans la position abaissée et soutient le pont basculant (5) dans sa position de basculement de maintenance.

2. Superstructure à benne basculante selon la revendication 1, dans laquelle l'élément de guidage côté pont basculant (31) fait saillie vers le bas au niveau du côté inférieur (33) du pont basculant (5) au-delà de son bord inférieur, dans laquelle il repose dans la position de basculement de maintenance du pont basculant (5) sur l'élément d'appui (15) du dispositif d'appui de sécurité et y est soutenu, lorsque l'élément d'appui (15) se trouve dans sa position d'appui.

3. Superstructure à benne basculante selon la revendication 1 ou 2, dans laquelle l'élément de guidage comprend deux éléments de guidage côté châssis (25), qui sont agencés l'un en face de l'autre au niveau de côtés (27) tournés l'un vers l'autre des longerons (9) et présentent une distance entre eux, et dans laquelle l'élément d'appui (15) s'étend transversalement à la direction longitudinale des longerons (9) au-delà de la distance entre les éléments de guidage côté châssis (25) de sorte que les éléments de guidage côté châssis (25) peuvent soutenir ensemble l'élément d'appui (15) dans sa position d'appui.

4. Superstructure à benne basculante selon la revendication 2 et 3, dans laquelle deux éléments de guidage côté pont basculant (31) du dispositif de guidage font saillie vers le bas au niveau du côté inférieur (33) du pont basculant (5) au-delà de son bord inférieur, dans laquelle ils reposent dans la position de basculement de maintenance du pont basculant (5) sur l'élément d'appui (15) du dispositif d'appui de sécurité et y sont soutenus, lorsque l'élément d'appui (15) se trouve dans sa position d'appui.

5. Superstructure à benne basculante selon la revendication 4, dans laquelle les éléments de guidage côté pont basculant (31) sont reçus recouvrant latéralement les éléments de guidage côté châssis (25) entre ceux-ci, lorsque le pont basculant (5) est dans sa position abaissée.

6. Superstructure à benne basculante selon la revendication 4 ou 5, dans laquelle les éléments de guidage côté châssis (25) et les éléments de guidage côté pont basculant (31) présentent des surfaces inclinées (35, 37) complémentaires les unes des autres en tant que surfaces de guidage pour l'entrée du pont basculant (5) dans sa position abaissée.

7. Superstructure à benne basculante selon l'une quelconque des revendications précédentes, dans laquelle l'élément d'appui (15) du dispositif d'appui de sécurité est logé au moyen d'un agencement à palier pivotant (21) mobile en pivotement autour d'un axe de pivotement (23) entre la position passive et la position d'appui.

8. Superstructure à benne basculante selon la revendication 7, dans laquelle l'axe de pivotement (23) s'étend transversalement à la direction longitudinale des longerons (9).

9. Superstructure à benne basculante selon la revendication 3, 7 et 8, dans laquelle l'agencement à palier pivotant (21) est fixé au niveau des éléments de guidage du dispositif de guidage côté châssis (25) se faisant face l'un l'autre.

10. Superstructure à benne basculante selon la revendication 9, dans laquelle l'élément d'appui (15) présente un contour en forme de U avec deux branches de retenue (17) et une traverse (19) reliant les branches de retenue, dans laquelle les branches de retenue (17) sont fixées au niveau de leurs extrémités éloignées de la traverse (19) de manière mobile en pivotement au niveau de l'agencement à palier pivotant (21) et dans laquelle la traverse (19) repose dans la position d'appui de l'élément d'appui (15) sur les éléments de guidage côté châssis (25) du dispositif de guidage et y est soutenue.

11. Superstructure à benne basculante selon l'une quelconque des revendications précédentes, dans laquelle le dispositif d'appui présente au moins un levier d'actionnement (24), qui fait saillie latéralement vers l'extérieur au-delà du bord d'au moins un des longerons (9), de sorte qu'il est actionnable manuellement pour le réglage de l'élément d'appui (15) depuis un côté latéral (26) du châssis (3) par un opérateur et l'opérateur ne doit pas saisir ce faisant dans une zone entre les longerons (9) et directement au-dessus des longerons (9), qui est occupée par le pont basculant (5) lors de son déplacement dans la position abaissée.

12. Superstructure à benne basculante selon la revendication 7 et la revendication 11, dans laquelle le levier d'actionnement (24) est relié directement à l'élément d'appui (15) et est réalisé en tant que levier rotatif avec un axe de rotation coaxial par rapport à l'axe de pivotement (23) de l'élément d'appui (15).

13. Superstructure à benne basculante selon l'une quelconque des revendications précédentes, dans laquelle l'angle de basculement du pont basculant (5) se situe entre la position abaissée et la position de basculement de maintenance entre 5° et 12°, en particulier entre 7° et 10°.

14. Camion en tant que véhicule à benne avec une superstructure à benne basculante selon l'une quelconque des revendications précédentes.
